# EUROPÄISCHE PATENTANMELDUNG

(11) **EP 1 389 668 A1**
(43) Veröffentlichungstag der Anmeldung: **18.02.2004**
(21) Anmeldenummer: 02018494.1
(22) Anmeldetag: 16.08.2002
(51) Int. Cl.: F01D 5/08, F02C 7/18, F01D 9/06

(54) **Gasturbine**

(71) Anmelder: SIEMENS AKTIENGESELLSCHAFT, 80333 München (DE)
(72) Erfinder: Hermeler, Juergen, 45721 Haltern (DE); Hoynacki, Axel, Dr., 45665 Recklinghausen (DE); Tiemann, Peter, 58452 Witten (DE)

(57) **Zusammenfassung**

In einer Gasturbine mit einem einen Verdichter (2) und eine Brennkammer (4) aufweisenden vorderen Gasturbinenteil (41) sowie mit einer eine Anzahl Leitschaufeln und Laufschaufeln (12) aufweisenden Turbine (6) weist eine Turbinenschaufel (12) einen Kühlkanal zur Kühlung mit einem Kühlmittel (K) auf. Eine energetisch besonders günstige Kühlung ist dadurch gegeben, dass eine Rückführleitung (24a,24b,24c) zur Rückführung von Kühlmittel (K) aus der Turbine (6) zum vorderen Gasturbinenteil (41) vorgesehen ist.

## Beschreibung

Die Erfindung betrifft eine Gasturbine mit einem einen Verdichter und eine Brennkammer aufweisenden vorderen Gasturbinenteil sowie mit einer eine Anzahl Leitschaufeln und Laufschaufeln aufweisenden Turbine, wobei eine Turbinenschaufel einen Kühlkanal zur Kühlung mit einem Kühlmittel aufweist.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise in Schaufelgruppen oder Schaufelreihen zusammengefaßten Laufschaufeln angeordnet, die über einen Impulsübertrag aus dem Arbeitsmedium die Turbinenwelle antreiben. Die Laufschaufeln weisen dabei üblicherweise zur geeigneten Führung des Arbeitsmediums ein profiliertes, entlang einer Schaufelachse erstrecktes Schaufelblatt auf, das von einem mit der Turbinenwelle verbindbaren Schaufelfuß getragen ist. Zur Führung des Arbeitsmediums in der Turbineneinheit sind zudem üblicherweise zwischen benachbarten Laufschaufelreihen mit dem Turbinengehäuse verbundene Leitschaufelreihen angeordnet.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades läßt sich dabei aus thermodynamischen Gründen grundsätzlich durch eine Erhöhung der Austrittstemperatur erreichen, mit der das Arbeitsmedium aus der Brennkammer ab- und in die Turbineneinheit einströmt. Daher werden Temperaturen von etwa 1200 °C bis 1300 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere von Lauf- und/oder Leitschaufeln der Turbineneinheit, vorgesehen. Die Turbinenschaufeln sind daher üblicherweise kühlbar ausgebildet, wobei insbesondere eine wirksame und zuverlässige Kühlung der in Strömungsrichtung des Arbeitsmediums gesehen ersten Schaufelreihen sichergestellt sein soll. Zur Kühlung weist die jeweilige Turbinenschaufel dabei üblicherweise einen in das Schaufelblatt oder das Schaufelprofil integrierten Kühlmittelkanal auf, von dem aus ein Kühlmittel gezielt insbesondere den thermisch belasteten Zonen der Turbinenschaufel zuleitbar ist.

Als Kühlmittel kommt dabei üblicherweise Kühlluft zum Einsatz. Diese wird der jeweiligen Turbinenschaufel häufig in der Art einer offenen Kühlung über einen integrierten Kühlmittelkanal zugeführt. Hierbei wird die Kühlluft mit dem Arbeitsmedium der Gasturbine vermischt. Im Gegensatz hierzu ist bei einem sogenannten geschlossenen Kühlluftsystem, welches beispielsweise aus der DE 198 24 766 A1 bekannt ist, keine Einleitung von Kühlluft in das Arbeitsmedium der Gasturbine vorgesehen. In jedem Fall, sowohl bei einem offenen als auch bei einem geschlossenen Kühlluftsystem, ist für die Bereitstellung der komprimierten Kühlluft eine erhebliche Leistung erforderlich, welche nicht mehr als Antriebsleistung der Turbine zur Verfügung steht und damit den Wirkungsgrad der Gasturbine mindert.

Der Erfindung liegt die Aufgabe zugrunde, eine Gasturbine mit kühlbaren Turbinenschaufeln anzugeben, welche sich durch eine energetisch besonders günstige Kühlung auszeichnet.

Diese Aufgabe wird erfindungsgemäß gelöst durch eine Gasturbine mit den Merkmalen des Anspruchs 1. Hierbei weist die Gasturbine einen vorderen Gasturbinenteil mit einem Verdichter und einer Brennkammer auf. Als weiterer Teil der Gasturbine ist eine Turbine mit Leitschaufeln und Laufschaufeln als Turbinenschaufeln vorgesehen, wobei eine Leit- und/oder Laufschaufel einen Kühlkanal für ein Kühlmittel, insbesondere Kühlluft, aufweist. Erfindungsgemäß ist eine Rückführleitung zur Rückführung von Kühlmittel aus der Turbine zum vorderen Gasturbinenteil vorgesehen. Die Rückführleitung ermöglicht eine Verwertung oder Behandlung, insbesondere Verdichtung, von zur Kühlung einer Turbinenschaufel eingesetztem Kühlmittel im vorderen Gasturbinenteil, d.h. insbesondere im Verdichter und/oder in der Brennkammer. Hierbei kann die Kühlluft nach der Durchströmung der Turbinenschaufel direkt und/oder über den Verdichter indirekt der Brennkammer zugeleitet werden. Aufgrund des Überdrucks, unter welchem das Kühlmittel nach dem Durchströmen zu kühlender Turbinenbauteile steht, ist eine Verdichtung dieses Kühlmittels bis zu einem zu erreichenden Enddruck mit relativ geringem Energieaufwand ermöglicht. Der Enddruck wird insbesondere benötigt, um das Kühlmittel als Verbrennungsluft der Brennkammer zuzuführen oder um das - evtl. zwischenzukühlende - Kühlmittel erneut als Kühlluft der Turbine zuzuführen.

Nach einer bevorzugten Ausgestaltung verläuft die Rückführleitung für das Kühlmittel axial durch die Turbinenwelle der Turbine. Hiermit ist eine Rückführung der Kühlluft von der Turbine direkt in den Luftverdichter der Gasturbine ermöglicht. Diese Kühlluftrückführung zentral durch die Gasturbine ist besonders raumsparend und strömungsgünstig ausgebildet. Vorzugsweise wird die Kühlluft direkt von einer Laufschaufel der Turbine in die axiale Rückführleitung eingespeist. Beim Überströmen der Kühlluft von der Laufschaufel in die Rückführleitung ist damit kein Übergang zwischen einem festen und einem rotierbaren Turbinenteil erforderlich. Jeglicher Kühlmittelverlust durch eine solche Strömung zwischen einen starren und einem rotierenden Turbinenteil ist damit ausgeschlossen. Damit ist zum einen der Kühlmittelverbrauch verringert, zum anderen ist ein wirkungsgradmindernder Eintritt von Kühlluft in das die Turbine durchströmende Arbeitsmedium ausgeschlossen. Durch die Rückführleitung ist das Kühlmittel direkt der geeigneten Verdichterstufe des Verdichters der Gasturbine zuführbar.

Zusätzlich oder alternativ zur Kühlluftverdichtung im Verdichter der Gasturbine kann eine Verdichtung von Kühlluft in einem externen Verdichter vorgesehen sein. Mit Hilfe dieser externen Kühlmittelverdichtung besteht kein bzw. lediglich ein geringer Leistungsbedarf für die Kühlmittelverdichtung in dem Verdichter der Gasturbine. Damit ist eine erhöhte Leistung der Gasturbine erreichbar.

Das im Verdichter der Gasturbine und/oder im externen Verdichter komprimierte Kühlgas wird vorzugsweise vor dessen Zuleitung zu den zu kühlenden Turbinenbauteilen in einem Kühler gekühlt. Hierdurch ist eine besonders wirksame Kühlung bei besonders geringem Kühlmittelmassenstrom gewährleistet.

Um in der Turbine sowohl starre Turbinenteile, beispielsweise Leitschaufeln, als auch rotierbare Turbinenteile, beispielsweise Laufschaufeln, durch einen Kühlmittelstrom innenkühlbar auszubilden, ist die Überleitung von Kühlmittel von einem starren zu einem rotierbaren Turbinenteil erforderlich. Hierbei sollten Kühlmittelverluste, d.h. ein Übertritt von Kühlmittel in das Arbeitsmedium der Turbine, möglichst gering gehalten werden. Zu diesem Zweck ist vorzugsweise ein sogenannter Preswirler oder eine Dralldüse vorgesehen. Der mit einem starren Turbinenteil verbundene Preswirler oder die Dralldüse beschleunigt das Kühlmittel gezielt derart, dass dieses nahezu verlustfrei in ein rotierendes Turbinenteil, insbesondere eine Laufschaufel oder die Turbinenwelle, überströmt. Umgekehrt ist zur Überleitung von Kühlmittel von einem rotierbaren Turbinenteil zu einem starren Turbinenteil zum gleichen Zweck vorzugsweise ein sogenannter Deswirler vorgesehen. Die erneute Einleitung von Kühlmittel aus einem rotierenden Turbinenteil in ein starres Turbinenteil über einen Deswirler ist insbesondere vorteilhaft, wenn das Kühlmittel anschließend einem nicht mit der Turbinenwelle rotierenden Teil, beispielsweise einem externen Verdichter und/oder einem externen Kühler, zugeführt wird.

Zur besonders effektiven Kühlung einer Leitschaufel weist diese vorzugsweise mehrere Kühlkanäle auf. Damit ist eine besonders gleichmäßige Kühlung der Leitschaufel erzielbar. Hierbei wird vorzugsweise in einen der Kühlkanäle der Leitschaufel durch eine erste Einspeiseöffnung Kühlmittel aus einem rotierbaren Turbinenteil eingeleitet, während in einen zweiten Kühlkanal der Leitschaufel durch eine zweite Einspeiseöffnung Kühlmittel aus einem starren Turbinenteil eingeleitet wird. Damit sind der Leitschaufel gezielt Kühlmittelströme mit unterschiedlichem Temperaturniveau zuführbar, insbesondere Kühlmittelströme, welche in unterschiedlichem Maße Energie von zuvor durchströmten Turbinenbauteilen, insbesondere einer Laufschaufel aufgenommen haben. Beispielsweise wird einer der beiden Kühlmittelströme durch die Leitschaufel zuvor bereits zur Kühlung von zwei Turbinenbauteilen, nämlich einer weiteren Leitschaufel und einer Laufschaufel, genutzt, während der zweite Kühlmittelstrom durch die Leitschaufel zuvor nicht zur Kühlung einer weiteren Turbinenschaufel genutzt wird. In der Leitschaufel ist damit durch die Nutzung sowohl eines frischen als auch eines zweifach zur Bauteilkühlung genutzten Kühlmittelstroms gezielt ein mittleres Temperaturniveau einstellbar. Dieses mittlere Temperaturniveau entspricht zumindest weitgehend dem Temperaturniveau in einer der Leitschaufel benachbarten Laufschaufel, welche durch Kühlmittel, das zuvor durch ein einziges zu kühlendes Turbinenbauteil, nämlich eine Leitschaufel, strömte, gekühlt wird. Die Gesamtlänge der Kühlkanäle der Leitschaufel stimmt dabei mit der Länge des einzigen Kühlkanals der Laufschaufel zumindest annähernd überein.

Nachfolgend wird ein Ausführungsbeispiel anhand einer Zeichnung näher erläutert. Darin zeigen:
- FIG 1: einen Halbschnitt durch eine Gasturbine,
- FIG 2: ausschnittsweise einen Querschnitt durch eine Gasturbine mit externer Kühlmittelkühlung,
- FIG 3: ausschnittsweise einen Querschnitt durch eine Gasturbine mit externer Kühlmittelverdichtung, und
- FIG 4: schematisch im Querschnitt mehrere kühlbare Leit- und Laufschaufeln einer Gasturbine.

Einander entsprechende Teile sind in allen Figuren mit den gleichen Bezugszeichen versehen.

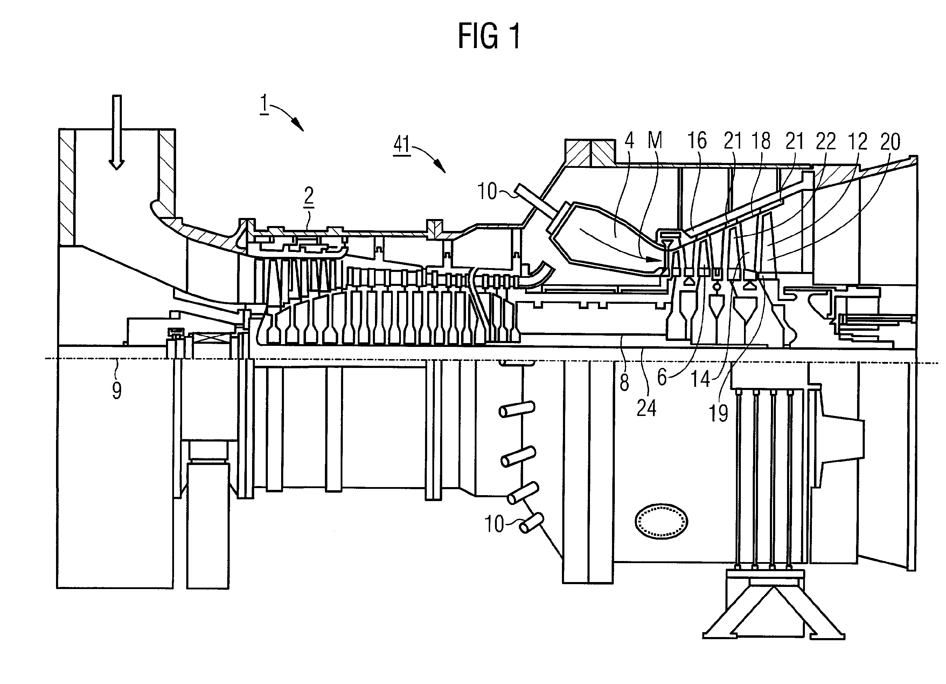

Die Gasturbine 1 gemäß Figur 1 weist einen Verdichter oder Luftverdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die.Arbeitsmaschine verbunden ist, und die um ihre Mittelachse oder Turbinenlängsachse 9 drehbar gelagert ist.

Die Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen. Die Brennkammer 4 ist ebenso wie die Turbine 6 Teil eines sogenannten vorderen Gasturbinenteils 41.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfaßt die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß 19 bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über einen auch als Plattform 18 bezeichneten Schaufelfuß 19 an der Turbinenwelle 8 befestigt, wobei der Schaufelfuß 19 jeweils ein entlang einer Schaufelachse erstrecktes profiliertes Schaufelblatt 20 trägt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 21 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand 16 oder andere Gehäuse-Einbauteile vor einer thermischen Überbeanspruchung durch das die Turbine 6 durchströmende heiße Arbeitsmedium M schützt.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1300 °C ausgelegt. Um dies zu ermöglichen, sind zumindest einige der Laufschaufeln 12 und der Leitschaufeln 14 durch Kühlluft K als Kühlmedium kühlbar ausgelegt. Kühlluft K, welche aus einem starren Turbinenteil, insbesondere einer Leitschaufel 14, in ein rotierbares Turbinenteil, insbesondere eine Laufschaufel 12, übergeleitet wird, wird von der Laufschaufel 12 aus durch eine axial durch die Turbinenwelle 8 verlaufende Rückführleitung 24 dem Verdichter 2 zugeführt.

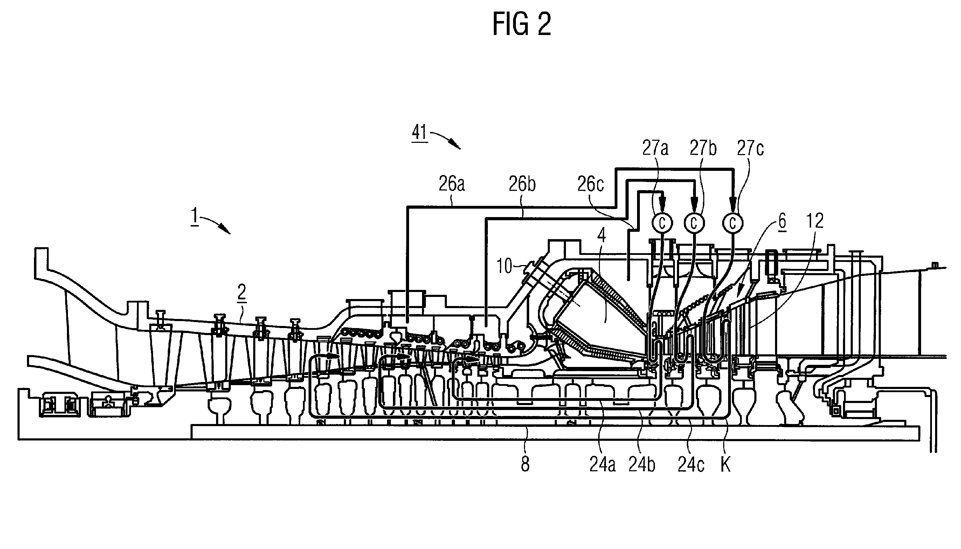

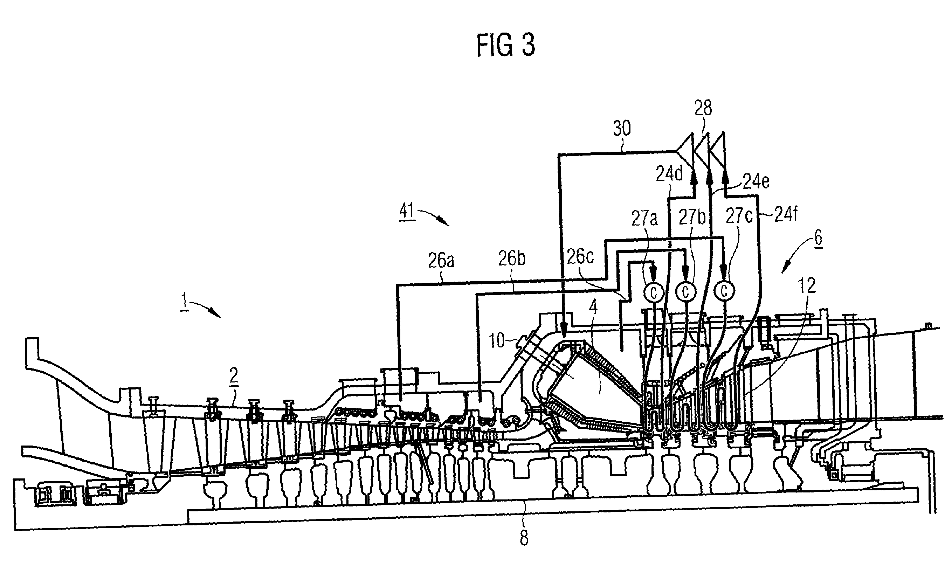

Verschiedene Kühlluftsysteme, welche Gasturbinen 1 ähnlich der in FIG 1 dargestellten aufweisen, sind in den Figuren 2 und 3 dargestellt. Bei der in FIG 2 dargestellten Ausführungsform wird die gesamte zur Kühlung der Turbine 2 vorgesehene Kühlluft K in dem Verdichter oder Luftverdichter 2 der Gasturbine 1 verdichtet. Die Kühlluft K wird hierbei in mehreren Turbinenstufen der Turbine 6 von Laufschaufeln 12 jeweils einer Laufschaufelreihe aus in separate, parallel zur Turbinenlängsachse 9 in der Turbinenwelle 8 verlaufende Rückführleitungen 24a,b,c eingespeist. Von den Rückführleitungen 24a,b,c aus wird die Kühlluft K verschiedenen Stufen des Luftverdichters 2 zugeführt. Die Kühlluft k wird hierbei im Randschichtbereich axial in Abströmrichtung der Schaufeln des Verdichters 2 dem Verdichtermassenstrom zugemixt. Die Kühlluft K, welche zuvor durch zu kühlende Bauteile der Turbine 6 geströmt ist, weist dabei ein wesentlich höheres Temperaturniveau auf, als der durch den Verdichter 2 strömende Verdichtermassenstrom. Im Verdichter 2 verdichtete Luft wird an verschiedenen Verdichterstufen bzw. nach der letzten Verdichterstufe im Bereich der Brennkammer 4 als Kühlluft K entnommen. Die Kühlluft K strömt durch drei Kühlluftleitungen 26a,b,c zu drei Kühlern 27a,b,c von wo aus sie der Turbine 6 zugeleitet wird. Der Kreislauf der Kühlluft K ist damit nicht vollständig geschlossen; vielmehr dient der Luftverdichter 2 für das Kühlmittel K als Mischstrecke, in welcher die Kühlluft K mit dem Hauptmassenstrom durch den Verdichter 2 vermischt wird. Durch diese Vermischung wird einerseits die Kühlluft K gekühlt, andererseits wird der durch den Verdichter 2 geführte Massenstrom an Verbrennungsluft erhitzt, wodurch in der Verbrennkammer 4 eine erhöhte Verbrennungstemperatur und damit ein erhöhter Wirkungsgrad der Gasturbine 1 erzielbar ist.

FIG 3 zeigt eine alternative Ausgestaltung einer Gasturbine 1 mit einem mehrstufigen Radialverdichter als externen Verdichter 28. Der externe Verdichter 28 dient in diesem Beispiel der Verdichtung von Kühlluft K, welche Bauteile, insbesondere Lauf schaufeln 12 und Leitschaufeln 14, der Turbine 6 kühlte. Das aus der Turbine 6 ausströmende Kühlmittel K wird über drei Rückführleitungen 24d,e,f verschiedenen Stufen des Radialverdichters 28 zugeführt und von diesem aus weiter durch eine Verbrennungsluftleitung 30 der Brennkammer 4 als Verbrennungsluft zugeführt. Eine axial durch die Turbinenwelle 8 verlaufende Rückführleitung, wie in dem in Fig. 2 dargestellten Ausführungsbeispiel mit den Rückführleitungen 24a,b,c gegeben, ist hier nicht vorgesehen. Die Zuführung von Kühlluft K zur Turbine 6 erfolgt, in gleicher Weise wie bei dem in Fig. 2 dargestellten Ausführungsbeispiel, über drei vom Verdichter 2 abzweigende Kühlluftleitungen 26a,b,c und drei Kühler 27a,b,c.

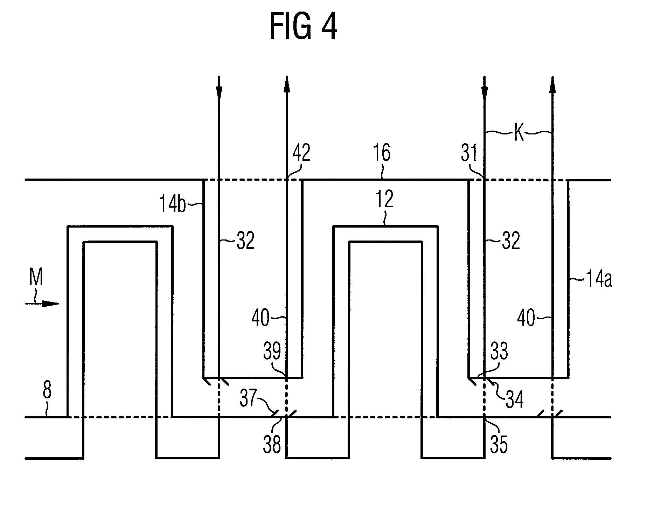

FIG 4 zeigt schematisch im Detail die Kühlluftführung in mehreren Lauf schaufeln 12 und Leitschaufeln 14. Die Kühlluft K wird hierbei durch eine erste Eintrittsöffnung oder Einspeiseöffnung 31 einer ersten Leitschaufel 14a zugeführt und durchströmt diese durch einen ersten Kühlkanal 32. An einer Austrittsöffnung 33 der Leitschaufel 14a ist ein Preswirler 34 angeordnet, welcher die Kühlluft K gezielt beschleunigt, so dass diese verlustarm, d.h. nahezu vollständig, ohne Einmischung in das Arbeitsmedium M, zu einer Eintrittsöffnung 35 in der Turbinenwelle 8 überströmt. Von der Turbinenwelle 8 aus strömt das Kühlmittel K durch einen Laufschaufelkühlkanal 36 zur Kühlung einer Laufschaufel 12. Nach Durchströmung der Laufschaufel 12 tritt das Kühlmittel K durch einen Deswirler 37 an einer Austrittsöffnung 38 aus der Turbinenwelle 8 aus und strömt in eine zweite Leitschaufel 14b über. Der Deswirler 37 hat ähnlich wie der Preswirler 34 die Aufgabe, Kühlmittel K verlustarm von einem rotierenden zu einem feststehenden Turbinenteil bzw. umgekehrt überzuleiten. Das aus der Turbinenwelle 8 als rotierbarem Turbinenteil der Leitschaufel 14b zugeleitete Kühlmittel K strömt durch eine zweite Einspeiseöffnung oder Eintrittsöffnung 39 in einen zweiten Kühlkanal 40 der Leitschaufel 14b ein. In den Leitschaufeln 14a,b befinden sich damit jeweils zwei Kühlkanäle 32,40, durch welche das Kühlmittel K auf unterschiedlichem Temperatur- und Druckniveau strömt. Das Kühlmittel K strömt durch eine Ausströmöffnung 42 aus der Leitschaufel 14b als, ebenso wie das Innengehäuse 16, starrem Turbinenteil aus und weiter zum externen Verdichter 28 (FIG 3).

Durch die Laufschaufel 12 strömt Kühlmittel K, welches zuvor bereits durch eine Turbinenschaufel, nämlich eine Leitschaufel 14 geströmt ist. Dagegen strömt durch die Leitschaufel 14a,b jeweils sowohl Kühlmittel K, welches zuvor nicht durch eine weitere zu kühlende Turbinenschaufel geströmt ist, d.h. frisches Kühlmittel K, als auch Kühlmittel K, welches zuvor bereits durch zwei zu kühlende Turbinenschaufeln, nämlich eine Leitschaufel 14 und anschließend eine Laufschaufel 12, geströmt ist. Mit dieser Konstellation ist sowohl innerhalb einzelner Turbinenschaufeln 12,14, als auch im Vergleich aneinander angrenzender Turbinenschaufeln 12,14 eine gleichmäßige Kühlung durch das Kühlmittel K erzielbar. Insbesondere an thermisch besonders hoch belasteten Stellen können einzelne Turbinenschaufeln 12,14 auch teilweise oder ganz offen kühlbar sein, d.h. Öffnungen aufweisen, durch die das Kühlmittel K gezielt von der Turbinenschaufel 12,14 aus in das Arbeitsmedium M einmischbar ist.

## Patentansprüche

1. Gasturbine mit einem einen Verdichter (2) und eine Brennkammer (4) aufweisenden vorderen Gasturbinenteil (41) sowie mit einer eine Anzahl Leitschaufeln (14,14a,14b) und Laufschaufeln (12) aufweisenden Turbine (6), wobei eine Turbinenschaufel (12,14,14a,14b) einen Kühlkanal (32,36,40) zur Kühlung mit einem Kühlmittel (K) aufweist, **gekennzeichnet durch** eine Rückführleitung (24,24a,24b,24c,24d,24e,24f) zur Rückführung von Kühlmittel (K) aus der Turbine (6) zum vorderen Gasturbinenteil (41).

2. Gasturbine nach Anspruch 1, **dadurch gekennzeichnet, dass** die Rückführleitung (24,24a,24b,24c,24d,24e,24f) axial durch eine Turbinenwelle (8) der Turbine (6) verläuft.

3. Gasturbine nach Anspruch 1 oder 2, **gekennzeichnet durch** einen externen Verdichter (28) zur Verdichtung von Kühlmittel (K) zur Kühlung der Turbine (6).

4. Gasturbine nach einem der Ansprüche 1 bis 3, **gekennzeichnet durch** einen Kühler (27a,b,c) zur Kühlung des der Turbine (6) zuzuführenden Kühlmittels (K).

5. Gasturbine nach einem der Ansprüche 1 bis 4, **gekennzeichnet durch** einen in der Turbine (6) angeordneten Preswirler (34) zur Überleitung von Kühlmittel (K) aus einem Kühlkanal (32) einer Leitschaufel (14,14a,14b) zu einem rotierbaren Turbinenteil (8,12).

6. Gasturbine nach einem der Ansprüche 1 bis 5, **gekennzeichnet durch** einen Deswirler (37) zur Überleitung von Kühlmittel (K) aus einem rotierbaren Turbinenteil (8,12) zur Leitschaufel (14,14a,14b).

7. Gasturbine nach Anspruch 1 bis 6, **dadurch gekennzeichnet, dass** die Leitschaufel (14, 14a, 14b) mehrere Kühlkanäle (32,40) aufweist.

8. Gasturbine nach Anspruch 7, **dadurch gekennzeichnet, dass** ein erster Kühlkanal (32) der Leitschaufel (14,14a,14b) eine erste Einspeiseöffnung (31) aufweist, durch welche Kühlmittel (K) aus einem starren Turbinenteil (16,21) zuführbar ist, und ein zweiter Kühlkanal (40) der Leitschaufel (14,14a,14b) eine zweite Einspeiseöffnung (39) aufweist, durch welche Kühlmittel (K) aus einem rotierbaren Turbinenteil (8,12) zuführbar ist.
